# EUROPEAN PATENT SPECIFICATION

(11) **EP 4 048 057 B1**
(45) Date of publication and mention of the grant of the patent: **04.10.2023**
(21) Application number: 19794509.0
(22) Date of filing: 23.10.2019
(51) Int. Cl.: A01G 3/02, A01G 3/025, A01G 3/033, A01G 3/047

(54) **CUTTING TOOL**
SCHNEIDWERKZEUG
OUTIL DE COUPE

(43) Date of publication of application: 31.08.2022
(73) Proprietor: HUSQVARNA AB, 561 82 Huskvarna (SE)
(72) Inventor: WANNENWETSCH, Christian, 89182 Bernstadt (DE); HEINRICH, Armin, 89415 Lauingen (DE); WEINBACH, Helmut, 89168 Niederstotzingen (DE)
(74) Representative: Finkele, Rolf
(86) International application number: PCT/EP2019/078951
(87) International publication number: WO 2021/078383

(56) References cited:
- WO-A1-2005/104816
- WO-A1-2019/170271
- CN-A- 106 561 306
- CN-A- 107 466 688
- CN-A- 108 575 374
- GB-A- 338 803
- GB-A- 756 952
- US-A1- 2004 107 582

## Description

### TECHNICAL FIELD

The present disclosure relates to cutting tools. More specifically, the present disclosure relates to a cutting tool which provides improved cutting performance by avoiding undesired gluing of cutting edges of the cutting tool.

### BACKGROUND

Cutting tools such as secateurs are used for performing cutting action using one or more cutting edges provided on blades of the cutting tools. Put simply, such tools provide mechanical advantage and ease of operation to a common user to conveniently perform operations such as cutting off branches of varying dimensions. However, such type of cutting operations can generally produce sap or liquid from branches which are being cut by the cutting edges.

Moreover, the sap or liquid can hinder normal working of the cutting tools by jamming or sticking to the cutting edges. This generally leads to substantial loss of effort to engage the object (i.e. the branches) with cutting edge(s), and at times leads to a jerky operation. Further, conventional cutting tools have a step-like arrangement on the cutting edges in order to shave-off or remove some of the sap or liquid stuck with the cutting edges. But there are various concerns regarding manufacturing, cleaning effectiveness and wherewithal constraints associated with production of the step-like arrangement on the cutting edges. Moreover, the step-like arrangement can leave some of the sap or liquid sticking with the cutting edges leading to a cumbersome and unclean cutting action.

An example of a cutting tool is provided by EP reference EP2158803 (hereinafter, referred to as '803 reference). The '803 reference discloses a blade arrangement having a first cutting member and a second cutter member which have respective cutting surfaces. The first cutter member is pivotably mounted with respect to the second cutter member. At least the first cutter member is moveable between a first angular position with respect to the second cutter member, in which a space is formed between the respective cutting surfaces, and a second angular position with respect to the second cutter member, in which the space between the respective cutting surfaces is closed. However, the ' 803 reference falls short of providing an easy-to-manufacture and effective solution to substantially shave-off any sap or liquids during cutting operation (of branches and the like) by the cutting tool.

Another example of a cutting tool is disclosed in GB 756,952 A (hereinafter referred to as '952 reference). The '952 reference discloses blades for shears having a longitudinal groove formed in that face of the blade which, when the blades of the tool are closed, lies nearest to the other blade, the groove commencing close to but spaced from the cutting or shearing edge of the blade and having a maximum depth which is small by comparison with the thickness of the blade, whereby part at least of a substance deposited on the blade during cutting may be received in the groove. However, the '952 reference falls short to disclose a groove being fluidly coupled with at least one boundary point of the second lever.

A further example of a cutting tool is disclosed in WO 2005/104 816 A1 (hereinafter referred to as '816 reference). The '816 reference discloses scissors together with a sterilizing apparatus. The scissors comprises a first blade and a second blade rotatably combined. The sterilizing apparatus comprises injection means injecting the disinfectant into one blade of the scissors during a cutting operation. The first blade comprises a cutting edge and a groove extending parallel to the cutting edge and provided on the surface of the first blade which is in contact with the second blade. The groove may extend the blade surface retention time of the disinfectant. However, the '816 reference falls short to disclose a groove being fluidly coupled with at least one boundary point of the second lever.

Thus, there is a need for an improved cutting performance, preferably with a jerk and non-sticky operation by cutting tools such as secateurs. Further, it would be an added benefit if the cutting tools would not require highly complex manufacturing as compared to conventional cutting tools.

### SUMMARY

In view of the above, it is an objective of the present invention to solve or at least reduce the drawbacks discussed above. The objective is at least partially achieved by a cutting tool. The cutting tool includes a first lever having a first end and a second end. The first lever defines a first handle portion towards the first end and a first cutting edge towards the second end. The cutting tool includes a second lever having a first end and a second end. The second lever defines a second handle portion towards the first end and a second cutting edge towards the second end. The second lever is pivotally coupled to the first lever at a pivot point such that the first lever and the second lever are adapted to perform relative movement between a closed position and an open position of the cutting tool. The second cutting edge is substantially in contact with the first cutting edge in the closed position of the cutting tool. Further, the second lever defines at least one groove. The at least one groove defines a first boundary disposed proximal to the second cutting edge and a second boundary disposed distal to the second cutting edge. The first cutting edge slides past the second boundary of the at least one groove when the cutting tool switches from the open position to the closed position. The groove is fluidly coupled with at least one boundary point of the second lever. The cutting tool is characterized in that the groove is fluidly coupled with at least one boundary point of the second lever.

Thus, the present disclosure provides a simple, efficient and easy-to-manufacture cutting tool which allows ease of removal of any sap or liquid produced during cutting of branches and the like, by role of the groove on the second lever of the cutting tool.

According to the present invention, the groove is fluidly coupled with at least one boundary point of the second lever. This allows ease of discharge of any liquid or sap from cutting of branches by the cutting tool.

According to an embodiment of the present invention, the at least one groove is a single groove. Alternatively, the at least one groove are multiple grooves. The number, shape, type, position, dimensions of the groove will depend upon multiple factors related to the cutting tool.

According to an embodiment of the present invention, the groove is disposed at a lateral offset from the second cutting edge.

According to an embodiment of the present invention, the groove is at least partially visible in the closed position of the cutting tool. This will allow better cleaning of the first cutting edge when the cutting tool switches between the open position and the closed position.

According to an embodiment of the present invention, the groove is defined as a rectilinear shape. According to an embodiment of the present invention, the groove is defined as a curvilinear shape, or any other shape as used or known in the art.

According to an embodiment of the present invention, the first lever and the second lever are made of aluminum. Choice of the material for any of the first lever and the second lever depends upon implementation and user specific factors.

According to an embodiment of the present invention, the cutting tool is one of: loppers and secateurs. The present disclosure may be implemented for any cutting tool including two or more levers such as lopper, pruner, secateur and the like.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a top view of a conventional cutting tool in an open state;
**FIG. 2** shows a top view of the conventional cutting tool in a closed state;
**FIG. 3** shows a top view of a cutting tool in an open state with a groove on a second lever of the cutting tool, in accordance with an embodiment of the present invention;
**FIG. 4** shows a top view of the cutting tool of **FIG. 3** in a closed state, in accordance with an embodiment of the present invention;
**FIG. 5** shows a side view of the cutting tool of **FIG. 4****,** in accordance with an embodiment of the present invention;
**FIG. 6** shows a top view of an example of a second lever of the cutting tool with a different profile of the groove, wherein the example is not encompassed by the wording of the claims but is considered as useful for understanding of the invention;
**FIG. 7** shows a top view of an example of the second lever of the cutting tool with another different profile of the groove, wherein the example is not encompassed by the wording of the claims but is considered as useful for understanding of the invention; and
**FIG. 8** shows a top view of an example of the second lever of the cutting tool having multiple grooves with different profiles, wherein the example is not encompassed by the wording of the claims but is considered as useful for understanding of the invention.

### DESCRIPTION OF EMBODIMENTS

The present disclosure will be described more fully hereinafter with reference to the accompanying drawings, in which example embodiments of the invention incorporating one or more aspects of the present invention are shown. This disclosure may, however, be embodied in many different forms and should not be construed as limited to the embodiments set forth herein; rather, these embodiments are provided so that this disclosure will be thorough and complete. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

In the drawings and specification, there have been disclosed preferred embodiments and examples and, although specific terms are employed, they are used in a generic and descriptive sense only and not for the purpose of limitation of the scope of the invention being set forth in the following claims.

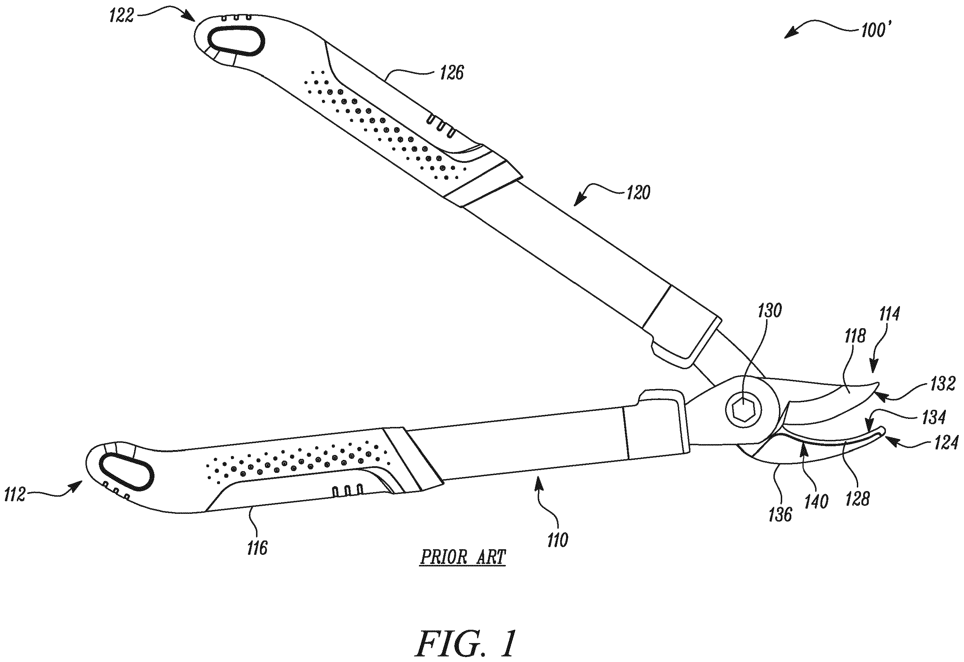

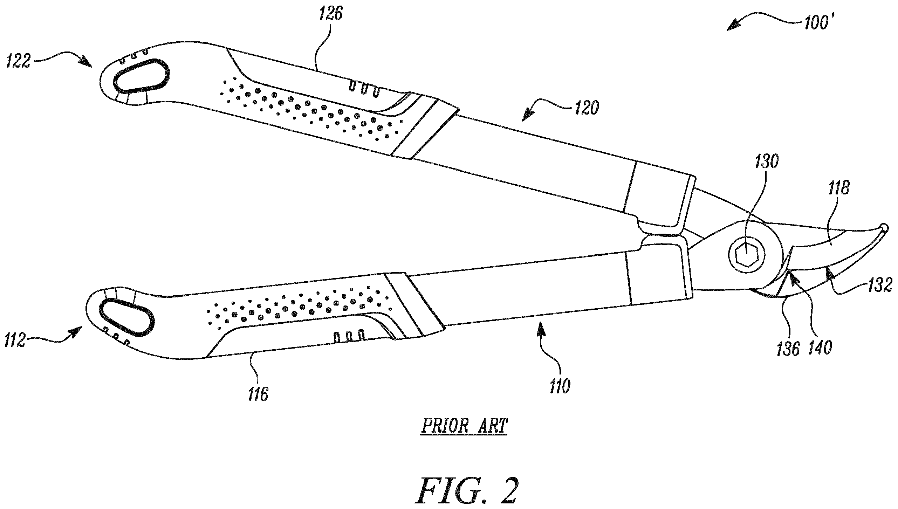

**FIG. 1** illustrate a conventional cutting tool **100'.** The conventional cutting tool **100'** is illustrated as secateurs although the present disclosure can be readily implemented with any cutting tool such as, but not limited to, pruners, shears, loppers or any other cutting tool with two or more levers. The conventional cutting tool **100'** includes a first lever **110** having a first end **112** and a second end **114.** The first lever **110** defines a first handle portion **116** towards the first end **112** of the first lever **110.** The conventional cutting tool **100'** includes a first surface **118** defined by the first lever **110** between the first end **112** and the second end **114.** The conventional cutting tool **100'** includes a second lever **120** having a first end **122** and a second end **124.** The second lever **120** defines a second handle portion **126** towards the first end **122** of the second lever **120.** The second lever **120** is pivotally coupled to the first lever **110** at a pivot point **130.** The conventional cutting tool **100'** includes a second surface **128** defined by the second lever **120** between the first end **122** and the second end **124** such that the second surface **128** is substantially in contact with the first surface **118.** The conventional cutting tool **100'** includes a first cutting edge **132** defined by the first lever **110** between the pivot point **130** and the second end **114** of the first lever **110.** The conventional cutting tool **100'** includes a second cutting edge **134** defined by the second lever **120** between the pivot point **130** and the second end **124** of the second lever **120.** The first lever **110** and the second lever **120** are adapted to perform relative movement between an open position and a closed position of the cutting tool **100',** as will be appreciated with reference to **FIGS. 1****,** **2** respectively.

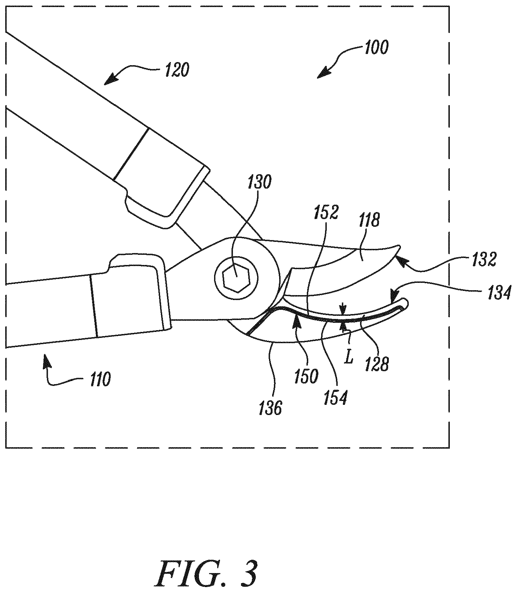

The second lever **120** of the conventional cutting tool **100'** includes a step **140** to take care of any sap or liquid from cutting of branches and the like. As will be evident to a person having knowledge in the art, during switching between the open position and the closed position the conventional cutting tool **100'** can encounter sap or liquid during cutting of branches between the first cutting edge **132** and the second cutting edge **134.** This undesired production of the sap or liquid can lead to sticking or jamming of the first lever **110** and the second lever **120,** making the cutting operations troublesome. Further, this can lead to a jerky and unsafe operation of the conventional cutting tool **100'** during switching between the open position and the closed position. The conventional cutting tool **100'** can be readily converted into a cutting tool **100** of the present disclosure by replacement of the second lever **120** with the step **140** with a lever, such as the second lever **120** of **FIG. 3** having at least one groove **150.**

As illustrated in **FIG. 3****,** the cutting tool **100** of the present disclosure is manufactured such that the second lever **120** defines the groove **150** on the second surface **128.** The groove **150** can be a single groove or multiple grooves suitably disposed on the second lever **120** as illustrated in various embodiments of the present disclosure. The groove **150** defines a first boundary **152** disposed proximal to the second cutting edge **134** and a second boundary **154** disposed distal to the second cutting edge **134.** This ensures that the first cutting edge **132** slides past the second boundary **154** of groove **150** when the cutting tool **100** switches from the open position to the closed position.

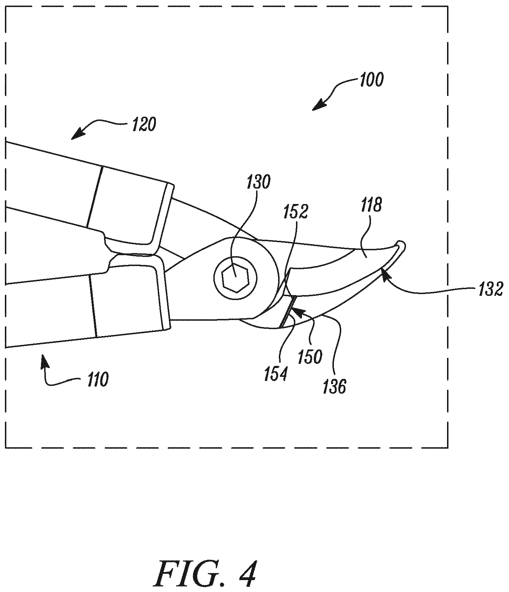

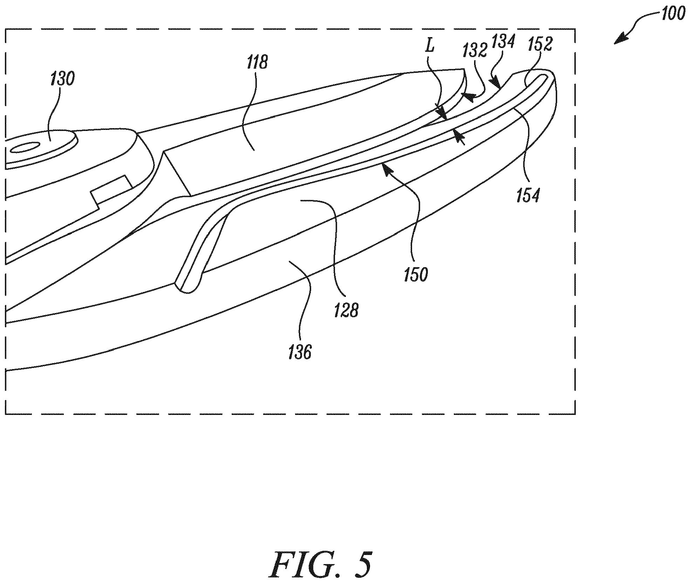

In some embodiments, the groove **150** can have any shape, dimensions, depth and the like as per the applications requirements. More particularly, the groove **150** will define a volume of the groove **150** which will decide the amount of the sap or liquid the groove **150** can receive and later discharge due to switching action between the open position and the closed position of the cutting tool **100.** As will be evident, the groove **150** will allow the sap or liquid to fill the volume of the groove **150** during cutting action by the cutting tool **100,** i.e. when the cutting tool **100** is actuated towards the closed position. Then, switching of the cutting tool **100** from the closed position to the open position will lead to shaving of the sap or liquid present in the groove **150.** This effectively happens since there is a solid surface (i.e. the second surface **128** of the second lever **120**) before the first boundary **152** and the groove **150** before the second boundary **154.** Moreover, as will be appreciated with reference to **FIGS. 4****,** **5****,** any of the sap or liquid left behind even after switching the cutting tool **100** from the closed position to the open position can leave through the groove **150** through any of end points of the groove **150,** as illustrated in **FIG. 5****.**

Making combined reference to **FIGS. 3****,** **4****, and** **5****,** the groove **150** is fluidly coupled with at least one boundary point **136** of the second surface **128.** This allows ease of discharge of any liquid or sap produced during cutting of branches by the cutting tool **100.** Further, the groove **150** is disposed at a lateral offset **L** from the second cutting edge **134** as illustrated in various embodiments of the present disclosure. However, the groove **150** can have some part aligned or overlapping with the second cutting edge **134** to suit application or any other requirement.

As best illustrated in **FIG. 4****,** the groove **150** is at least partially visible in the closed position of the cutting tool **100.** This will allow better cleaning of the first cutting edge **132** when the cutting tool **100** switches between the open position and the closed position. This will also ensure that the cleaning of the groove **150** takes place even during closed position of the cutting tool **100,** since the partially visibility of the groove **150** can allow easy discharge of the sap or liquid.

In some embodiments, the groove **150** of the present disclosure as illustrated in various embodiments such as **FIGS. 3****,** **5** can have a curvilinear profile, or any other profile to suit application particularly for desired cleaning action. This curvilinear profile of the groove **150** will allow better cleaning by the groove **150** since the sap or liquid within the volume of the groove **150** will clean away in almost most positions of the cutting tool **100.** This will ensue since any position of the cutting tool **100** will allow the sap or liquid to move under gravitational pull and allow better cleaning action due to this curvilinear profile of the groove **150.**

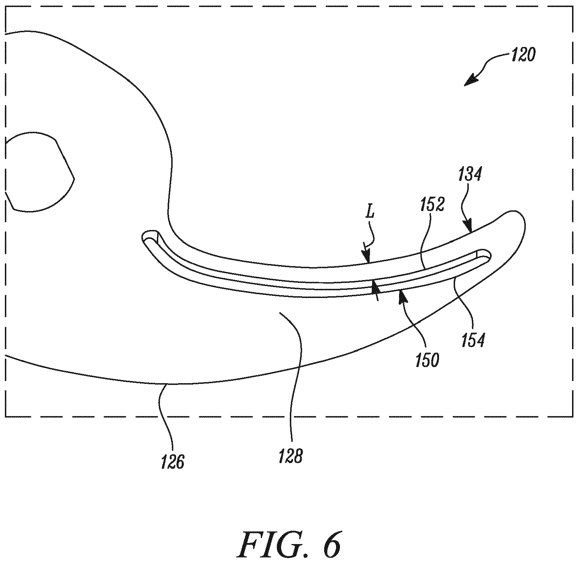

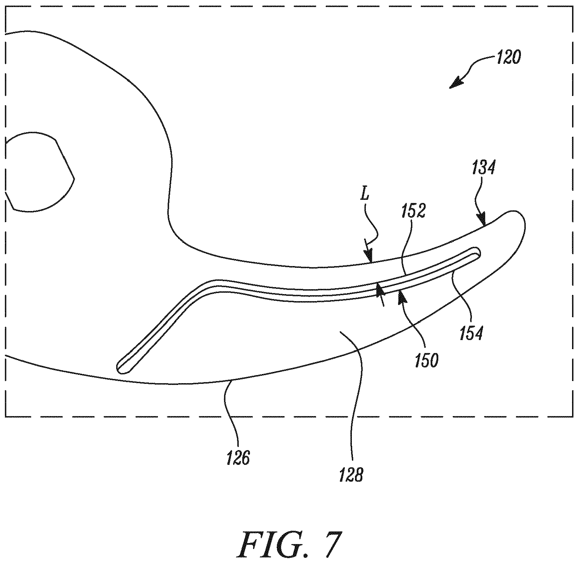

**FIGS. 6****, and** **7** show an example of the second lever **120** of the cutting tool 100 with different profiles of the groove **150** on the second lever **120,** wherein the embodiment is not encompassed by the wording of the claims but is considered as useful for understanding the invention. As illustrated in **FIGS. 6****,** **7****,** the second lever **120** can have various configurations or arrangements of the groove **150.** The groove **150** is defined as a curvilinear shape, where the groove **150** can remain adjacent to the second cutting edge **134** as illustrated in **FIG. 6****.** As illustrated in **FIG. 7****,** the groove **150** with the curvilinear shape can extend away from the second cutting edge **134** towards the boundary point **136** of the second lever **120.** In some embodiments, the groove **150** can be defined as a rectilinear shape.

In some embodiments, the first lever **110** and the second lever **120** are made of aluminum, steel, or any other material as used or known in the art. Choice of the material for any of the first lever **110** and the second lever **120** depends upon implementation and user specific factors. Further, the cutting tool **100** can be one of loppers, pruners and secateurs. The present disclosure may be implemented for any cutting tool **100** including two or more levers such as lopper, pruner, secateur and the like.

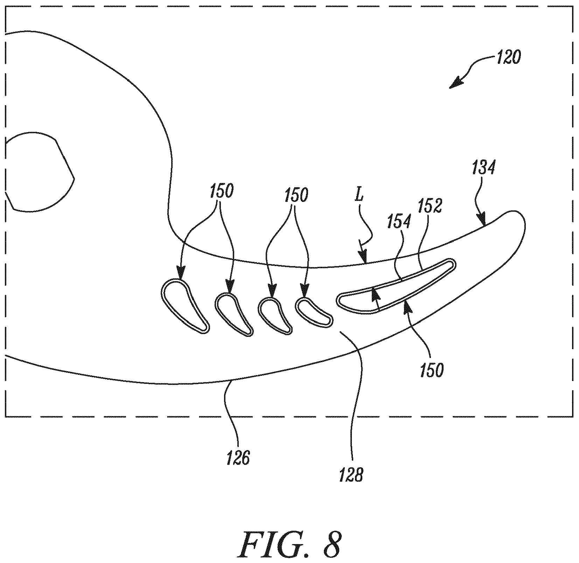

According to an embodiment of the present invention, the at least one groove **150** is a single groove **150** as illustrated in **FIG. 3****.** According to an example as illustrated in **FIG. 8****,** the second lever **120** of the cutting tool **100** can have multiple grooves **150** with different profiles, wherein the example is not encompassed by the wording of the claims but is considered as useful for understanding the invention. The different profiles of the groves **150** can be shaped like leaves, circle, oval or any other shape to suit the requirement. As illustrated in **FIG. 8****,** three small grooves **150** are provided on a left side of the second cutting edge **134** along with a substantially larger groove **150** on a right side of the second cutting edge **134** to cover desired area of the second lever **120.** Further, the grooves **150** have a common line or curvature disposed at a distance around the lateral offset **L** from the second cutting edge **134** as illustrated, however any other distance, orientation, and position of the grooves **150** are possible. The number, shape, type, position, dimensions of the grooves **150** will depend upon multiple factors related to the cutting tool **100.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100': Conventional Cutting Tool
- 100: Cutting Tool
- 110: First Lever
- 112: First End
- 114: Second End
- 116: First Handle Portion
- 118: First Surface
- 120: Second Lever
- 122: First End
- 124: Second End
- 126: Second Handle Portion
- 128: Second Surface
- 130: Pivot Point
- 132: First Cutting Edge
- 134: Second Cutting Edge
- 136: Boundary Point
- 140: Step
- 150: Groove
- 152: First Boundary
- 154: Second Boundary
- L: Lateral Offset

## Claims

1. A cutting tool (**100**) comprising:
a first lever (**110**) having a first end (**112**) and a second end (**114**), wherein the first lever (**110**) defines a first handle portion (**116**) towards the first end (**112**) and a first cutting edge (**132**) towards the second end (**114**);
a second lever (**120**) having a first end (**122**) and a second end (124), wherein the second lever (**120**) defines a second handle portion (**126**) towards the first end (**122**) of the second lever (**120**) and a second cutting edge (**134**) towards the second end (**124**)
wherein the second lever (**120**) is pivotally coupled to the first lever (**110**) at a pivot point (**130**) such that the first lever (**110**) and the second lever (**120**) are adapted to perform relative movement between a closed position and an open position of the cutting tool (**100**);
the second cutting edge (**134**) is substantially in contact with the first cutting edge (**132**) in the closed position of the cutting tool (**100**);
the second lever (**120**) defines at least one groove (**150**), wherein the at least one groove (**150**) defines a first boundary (**152**) disposed proximal to the second cutting edge (**134**) and a second boundary (**154**) disposed distal to the second cutting edge (**134**);
the first cutting edge (**132**) slides past the second boundary (**154**) of the at least one groove (**150**) when the cutting tool (**100**) switches from the open position to the closed position;
with the groove (**150**) being disposed at a lateral offset (**L**) from the second cutting edge (**134**);
**characterized in that**
the groove (**150**) is fluidly coupled with at least one boundary point (**136**) of the second lever (**120**).

2. The cutting tool (**100**) of any of preceding claims, wherein at least one groove (**150**) is a single groove (**150**).

3. The cutting tool (**100**) of claim 1 or 2, wherein at least one groove (**150**) are multiple grooves (**150**).

4. The cutting tool (**100**) of any of preceding claims, wherein the groove (**150**) is at least partially visible in the closed position of the cutting tool (**100**).

5. The cutting tool (**100**) of any of preceding claims, wherein the groove (**150**) is defined as a rectilinear shape.

6. The cutting tool (**100**) of any of preceding claims, wherein the groove (**150**) is defined as a curvilinear shape.

7. The cutting tool (**100**) of any of preceding claims, wherein the first lever (**110**) and the second lever (**120**) are made of aluminum.

8. The cutting tool (**100**) of any of preceding claims, wherein the cutting tool (**100**) is one of: loppers, pruners and secateurs.

## Patentansprüche

1. Schneidwerkzeug (100) aufweisend:
einen ersten Hebel (110) mit einem ersten Ende (112) und einem zweiten Ende (114), wobei der erste Hebel (110) einen ersten Griffabschnitt (116) zum ersten Ende (112) und eine erste Schneidkante (132) zum zweiten Ende (114) hin ausbildet;
einen zweiten Hebel (120) mit einem ersten Ende (122) und einem zweiten Ende (124), wobei der zweite Hebel (120) einen zweiten Griffabschnitt (126) zum ersten Ende (122) des zweiten Hebels (120) und eine zweite Schneidkante (134) zum zweiten Ende (124) hin ausbildet
wobei der zweite Hebel (120) schwenkbar mit dem ersten Hebel (110) in einem Drehpunkt (130) gekoppelt ist, so dass der erste Hebel (110) und der zweite Hebel (120) geeignet sind, eine relative Bewegung zwischen einer geschlossenen Stellung und einer offenen Stellung des Schneidwerkzeugs (100) auszuführen;
die zweite Schneidkante (134) in der geschlossenen Stellung des Schneidwerkzeugs (100) im Wesentlichen in Kontakt mit der ersten Schneidkante (132) ist;
der zweite Hebel (120) zumindest eine Nut (150) ausbildet, wobei die zumindest eine Nut (150) eine erste Begrenzung (152) ausbildet, die proximal zur zweiten Schneidkante (134) angeordnet ist, und eine zweite Begrenzung (154), die distal zur zweiten Schneidkante (134) angeordnet ist;
die erste Schneidkante (132) an der zweiten Begrenzung (154) der zumindest einen Nut (150) vorbeigleitet, wenn das Schneidwerkzeug (100) von der offenen Stellung in die geschlossene Stellung wechselt;
wobei die Nut (150) mit einem seitlichen Versatz (L) zu der zweiten Schneidkante (134) angeordnet ist;
**dadurch gekennzeichnet, dass**
die Nut (150) mit zumindest einem Begrenzungspunkt (136) des zweiten Hebels (120) fluidisch gekoppelt ist.

2. Schneidwerkzeug (100) nach einem der vorhergehenden Ansprüche, wobei zumindest eine Nut (150) eine einzelne Nut (150) ist.

3. Schneidwerkzeug (100) nach Anspruch 1 oder 2, wobei zumindest eine Nut (150) aus mehreren Nuten (150) gebildet ist.

4. Schneidwerkzeug (100) nach einem der vorhergehenden Ansprüche, wobei die Nut (150) zumindest teilweise in der geschlossenen Stellung des Schneidwerkzeugs (100) sichtbar ist.

5. Schneidwerkzeug (100) nach einem der vorhergehenden Ansprüche, wobei die Nut (150) durch eine geradlinige Form definiert ist.

6. Schneidwerkzeug (100) nach einem der vorhergehenden Ansprüche, wobei die Nut (150) durch eine gekrümmte Form definiert ist.

7. Schneidwerkzeug (100) nach einem der vorhergehenden Ansprüche, wobei der erste Hebel (110) und der zweite Hebel (120) aus Aluminium ausgeführt sind.

8. Schneidwerkzeug (100) nach einem der vorhergehenden Ansprüche, wobei das Schneidwerkzeug (100) eines der folgenden ist: Astschere, Baumschere und Gartenschere.

## Revendications

1. Outil de coupe (100) comprenant :
un premier levier (110) ayant une première extrémité (112) et une seconde extrémité (114), dans lequel le premier levier (110) définit une première partie de poignée (116) vers la première extrémité (112) et un premier bord de coupe (132) vers la seconde extrémité (114) ;
un second levier (120) ayant une première extrémité (122) et une seconde extrémité (124), dans lequel le second levier (120) définit une seconde partie de poignée (126) vers la première extrémité (122) du second levier (120) et un second bord de coupe (134) vers la seconde extrémité (124)
dans lequel le second levier (120) est couplé de manière pivotante au premier levier (110) à un point de pivotement (130) de sorte que le premier levier (110) et le second levier (120) sont adaptés pour effectuer un mouvement relatif entre une position fermée et une position ouverte de l'outil de coupe (100) ;
le second bord de coupe (134) est sensiblement en contact avec le premier bord de coupe (132) dans la position fermée de l'outil de coupe (100) ;
le second levier (120) définit au moins une rainure (150), dans laquelle l'au moins une rainure (150) définit une première limite (152) disposée à proximité du second bord de coupe (134) et une seconde limite (154) disposée à distance du second bord de coupe (134) ;
le premier bord de coupe (132) coulisse le long de la seconde limite (154) de l'au moins une rainure (150) lorsque l'outil de coupe (100) passe de la position ouverte à la position fermée ;
la rainure (150) étant disposée en décalage latéral (L) par rapport au second bord de coupe (134) ;
**caractérisé en ce que**
la rainure (150) est couplée fluidiquement à au moins un point limite (136) du second levier (120).

2. Outil de coupe (100) selon l'une quelconque des revendications précédentes, dans lequel au moins une rainure (150) est une rainure unique (150).

3. Outil de coupe (100) selon la revendication 1 ou 2, dans lequel au moins une rainure (150) sont des rainures multiples (150).

4. Outil de coupe (100) selon l'une quelconque des revendications précédentes, dans lequel la rainure (150) est au moins partiellement visible dans la position fermée de l'outil de coupe (100).

5. Outil de coupe (100) selon l'une quelconque des revendications précédentes, dans lequel la rainure (150) est définie comme une forme rectiligne.

6. Outil de coupe (100) selon l'une quelconque des revendications précédentes, dans lequel la rainure (150) est définie comme une forme curviligne.

7. Outil de coupe (100) selon l'une quelconque des revendications précédentes, dans lequel le premier levier (110) et le second levier (120) sont réalisés en aluminium.

8. Outil de coupe (100) selon l'une quelconque des revendications précédentes, dans lequel l'outil de coupe (100) est l'un des éléments suivants : des élagueurs et des sécateurs.
